# EUROPEAN PATENT SPECIFICATION

(11) **EP 4 697 639 B1**
(45) Date of publication and mention of the grant of the patent: **30.09.2026**
(21) Application number: 24194418.0
(22) Date of filing: 13.08.2024
(51) Int. Cl.: H04L 9/00

(54) **PROTECTION OF DEVICES AGAINST SIDE CHANNEL ATTACKS**
SCHUTZ VON VORRICHTUNGEN GEGEN SEITENKANALANGRIFFE
PROTECTION DE DISPOSITIFS CONTRE DES ATTAQUES PAR CANAL LATÉRAL

(43) Date of publication of application: 18.02.2026
(73) Proprietor: Nagravision Sàrl, 1033 Cheseaux-sur-Lausanne (CH)
(72) Inventor: PELLETIER, Herve, 1033 Cheseaux-sur-Lausanne (CH); PACE, Pierugo, 1033 Cheseaux-sur-Lausanne (CH)
(74) Representative: Parker, Andrew James

(56) References cited:
- US-A1- 2024 020 383
- US-A1- 2024 089 079
- US-A1- 2024 095 410

## Description

### FIELD OF THE INVENTION

The present invention relates to a computer-implemented method of modifying the execution of a sensitive algorithm on a device, and to a data processing component configured to execute the computer-implemented method.

### BACKGROUND

The recent development of AI computation capabilities opens the door to ever more efficient and complex attacks in side-channel analysis. Using lab equipment, the inventors recently demonstrated that one can train a deep learning model on a copy of the targeted device to recover a cryptographic secret on the real one.

Using deep learning techniques, and other machine-learning techniques, it is possible to bypass classical countermeasures that are based, for example, on random mask values and shuffling.

Such attacks are generally mounted following two phases: the training phase and the inference phase.

The training phase comprises gathering traces or other leakage signals from a copy of the targeted device to learn how to recover a secret from them. Once the model is stabilized, the inference phase takes place on the real targeted device. The attacker collects the traces and feeds them to its trained model that has learned how to predict the secret from them. For a successful prediction, it is crucial that the data sources of the two phases follow the same distribution. Here, by "the same distribution", we mean that the data that is collected (i.e., the traces) comes from the same probability distribution. In the specific example of electromagnetic traces leaking from the device, many factors affect this distribution: the position of the probe on the chip, the thinning of the chip, the setup of the oscilloscope (e.g., the moment you start collecting your traces should always be the same, to the nanosecond) In laboratory-based experiments, it is possible to achieve this, because the traces are collected from a single device with a given setup. In reality, when working with two separate devices, ensuring the same data distribution is much more complex, requiring the exact same setup on both devices: the same code, the same thinning of the chip, the same position of the probe on the latter, the same setup of the oscilloscope, etc. It is challenging, but possible.

Machine-learning models such as deep learning models, or other analytical techniques which can estimate the probability distribution can avoid classical countermeasures because they can learn how to recognize them during their training and detect them during the inference. More specifically, a deep learning model may be trained by supplying training data which comprises pairs of data comprising input data and target data. Within each pair, the input data may comprise examples of traces, and the target data may comprise the secret which is being transmitted in the traces. By using machine-learning training techniques, a deep learning model for example can be trained to derive a secret from an unknown trace. Herein, the term "trace" refers, for example, to an electromagnetic signal which leaks from the device during e.g. transmission of a signal, or use of the secret (e.g. the application of a cryptographic key).

Training such models requires heavy computation capabilities and is often impracticable without any pre-processing steps. To decrease the complexity of the training phase, a common method is to first select the window of the trace that contains valuable information and discarding the rest. The smaller windows are referred to herein as the points of interest (POIs) of the traces.

US 2024/0020383 A1 describes a method for protecting an electronic device from a side-channel attack, comprising a plurality of countermeasures that are protecting the electronic device from the side-channel attack.

US 2024/0095410 A1 provides a method for securing a security device against side-channel analysis attacks while performing sensitive information including training a neural network.

The present invention has been devised in light of the above considerations.

### SUMMARY OF THE INVENTION

The problem is solved by a computer-implemented method according to claim 1 and by a data processing component according to claim 10. Preferred embodiments of the computer-implemented method are claimed in the dependent claims.

The proposed countermeasure aims to prevent an attacker from finding these POIs by altering the data distributions (assumed identical) of the device used for training and the one used for inference. An attacker would then require unrealistic computation capabilities to train a more complex model that considers the entire trace.

Broadly speaking, the present invention provides a computer-implemented method of modifying the execution of a sensitive algorithm through the execution, during execution of the sensitive algorithm, of one or more countermeasures which are generated based on a secret which is unique to the device executing the sensitive algorithm. This ensures that an attacker training a deep learning model using POls of traces leaked by a training device will not be able to use the model on a different, inference device, because the POIs will not correspond, in time, to the POIs on the training device.

More specifically, a first aspect of the invention provides a computer-implemented method of modifying the execution of a sensitive algorithm by a device having a secret ***S*** associated with it, wherein execution of the sensitive algorithm comprises using a critical value *kᵢ*, the computer-implemented method comprising: generating signal modification data based on the secret ***S***, the signal modification data defining one or more countermeasures to be executed during execution of the sensitive algorithm; and executing the sensitive algorithm and one or more countermeasures according to the signal modification data.

To change the data distribution across different devices, the time evolution of the signal may be modified in a manner which is unique and unpredictable to each device and critical value. Accordingly, the countermeasures may be configured to affect or modify the time evolution of signals, such as electromagnetic signals or traces, or any other signals which leak from the device during execution of the sensitive algorithm (relative to the scenario where no countermeasures are executed during execution of the sensitive algorithm), thereby enhancing the security of the device against side channel attacks. The term "signal modification data" is used throughout this application because the modifications which are made to the execution of the sensitive algorithm lead to a modification of potential leakage signals.

Herein, the term "sensitive algorithm" is used as a label to refer to any algorithm which involves sensitive data. For example, the sensitive algorithm may be a cryptographic algorithm such as an encryption algorithm or a decryption algorithm. Execution of the sensitive algorithm may comprise the use of a critical value, which is a secret value which is used to execute the algorithm. More specifically, executing the sensitive algorithm and countermeasures according to the signal modification data may comprise executing, using the critical value, the sensitive algorithm and countermeasures according to the signal modification data. In the case of cryptographic algorithms, the critical value may be in the form of a cryptographic key. It is the critical value which attackers attempt to derive when performing side channel attacks, because knowledge of the key may enable them to e.g. decrypt encrypted messages, or to generate encrypted messages as if they were the "real" sender of the messages. The purpose of the present invention is to make it much more difficult, if not impossible, for an attacked to be able to derive the critical value associated with a sensitive algorithm using techniques including machine-learning techniques such as the application of deep learning methods.

As discussed, attackers typically train deep learning models by examining the POIs in traces such as electromagnetic traces which leak from a training device, to which they have access. Then, the deep learning models are applied to traces which leak from a "real" inference device, to which the attacker has not had prior access. According to the present invention, the signal modification data is based on a secret *S* which is associated with the device executing the algorithm. This means that the countermeasures which are executed during execution of the sensitive algorithm on the training device are very different from the countermeasures which are executed during execution of the sensitive algorithm on the inference device. This effectively renders the training useless, so that the deep learning model cannot be used to derive the key.

It is desirable for small changes in the secret *S* to give rise to significant, large-scale changes in the signal modification data, to ensure that the countermeasures executed during execution of the sensitive algorithm on the training device are very different from the countermeasures which are executed during execution of the sensitive algorithm on the inference device. This makes it far more difficult for attackers to learn how to derive the critical value associated with the sensitive algorithm when training a deep learning model on a different device from the inference device.

Accordingly, the signal modification data may be based on a hash of the secret *S* which is associated with the device. Generating the signal modification data may comprise applying a hashing algorithm to the secret *S* associated with the device. Suitable hashing algorithms include MD5, SHA-1, SHA-3, SHA-256, and SHA-512. Using a hash is advantageous because they are deterministic, but very small changes (e.g. changing one digit in a bitstring) lead to the hash changing completely, i.e. hashing algorithms are very sensitive to small changes in the input. Herein, when it is stated that the signal modification data is "based on" the secret *S*, it should be understood that generating the signal modification data includes a calculation or computation which involves the secret *S* or a hash of the secret *S*. The secret *S* may take any form which can form the input to a hashing algorithm, e.g. a word, an integer, a bitstring, or an alphanumeric string. The hash of the secret *S* may comprise or be a bitstring having a length *L,* and is referred to throughout this patent application as *H*₀.

The signal modification data defines one or more countermeasures to be executed during execution of the sensitive algorithm. More specifically, the signal modification data may define, for each countermeasure, the nature of the countermeasure, and a timing position at which the countermeasure is to be executed during execution of the sensitive algorithm. Execution of the sensitive algorithm may comprise a plurality of critical operations, for example no fewer than 10, 20, 50, or 100 critical operations, and for example no more than 100, 200, 500, or 1000 critical operations. Herein, the term "critical operation" is used to refer to an operation which requires use of the critical value. It is during execution of the critical operations when the device is most vulnerable to attack, because this is when data from which the critical value may be derived is most likely to leak from the device. The number and timing positions of the critical operations of the sensitive algorithm may be known in advance, and accordingly the POIs of the sensitive algorithm may also be known in advance, since they generally correspond to the critical operations. This information may be obtained by collecting traces leaking from a device executing the sensitive algorithm in an unprotected manner (i.e. with no countermeasures), and applying signal processing techniques.

The signal modification data may define or specify a respective countermeasure corresponding to one or more, or each of a plurality of critical operations executed during execution of the sensitive algorithm. Alternatively, the signal modification data may define or specify a respective countermeasure corresponding to at least 10%, at least 25%, at least 50%, or at least 75% of the critical operations executed during execution of the sensitive algorithm. In some cases, the signal modification data may define or specify a respective countermeasure corresponding to each critical operation executed during execution of the sensitive algorithm. The timing position at which the countermeasure is to be executed during execution of the sensitive algorithm may comprise a reference to the critical operation to which a given countermeasure corresponds. For example, the signal modification data may specify that each countermeasure is to be executed before execution of the respective critical operation to which it corresponds, and/or after the critical operation executed immediately before the respective critical operation to which the countermeasure corresponds. The signal modification data may specify that each countermeasure is to be executed immediately before execution of the respective critical operation to which it corresponds.

The signal modification data may comprise data defining each of the one or more countermeasures.

We now discuss the nature of the countermeasures, i.e. the type of countermeasure. The countermeasures may take a number of forms:
- Each countermeasure may comprise a delay. The delay may be defined in terms of an absolute length of time (in e.g. seconds, milliseconds, microseconds, or nanoseconds), or in terms of a number of cycles of a clock of the device or a clock associated with the device.
- Each countermeasure may comprise a modification of the clock ratio of the device.
- Each countermeasure may comprise a dummy interruption of the execution of the sensitive algorithm. Modern CPU architectures include interruptions that allow the execution flow to break for a moment to process something else more important before returning to it. An interruption can be generated at any time with some parameters associated to it, such as its duration. A dummy interruption refers here to the generation of such an interruption in order to purposely disrupt the execution of the algorithm. It is similar to a delay but instead of doing nothing, other data is processed. Throughout this application, optional features pertaining to the generation of signal modification data defining countermeasures in the form of delays may also pertain to generation of signal modification data defining countermeasures in the form of dummy interruptions.

It should be noted that any suitable countermeasure may be used, the signal modification data defining, for example, the number of times which it is executed for a given critical operation. Examples of such countermeasures are the clock stealer countermeasure, masking and shuffling.

In some implementations, the countermeasures defined by the signal modification data take various different forms, i.e. the nature of the countermeasure corresponding to one critical operation may be different from the nature of the countermeasure corresponding to another critical operation.

We now discuss the generation of the data defining each of the one or more countermeasures. While the below description refers to data defining a single countermeasure, it will be noted that it applies to the data defining every countermeasure. For some important countermeasures, such as delays, the signal modification data may define the duration, or length in time, of the countermeasure. We now discuss how these durations are deterministically generated based on at least the secret *S*.

For each countermeasure, the data defining the duration is preferably generated from two sub-durations, referred to herein as a bias and an adjustment. The duration of the countermeasure may be the sum of the bias and the adjustment. The bias effectively defines the gross duration, and the adjustment defines a smaller adjustment to the bias. The bias is preferably dependent on the secret *S*, to ensure that the overall duration is strongly dependent on the device on which the sensitive algorithm is to be executed. The bias may be, or be derived from, the hash *H*₀ of the secret *S*. In some cases the bias may be derived from a substring of the hash *H*₀, for example where the hash *H*₀ includes a large number of bits which would lead to excessively complex computations or delays which would lead to large overheads. The quantity derived from the hash may be referred to as the bias duration *d_{b},* and may be derived, for example by selecting a subset of the bits forming the hash, or selecting a substring of the hash *H*₀. The subset of bits or the substring may comprise no fewer than 1, 2, 4, 8, 16, 32, 64, or 128 bits. The bias component of the duration of the countermeasure may either the bias duration *d_{b}*, or may be a multiple of it. The multiple may be 2*^{v}*, where *v* is defined below. The multiple may take other values, to ensure that it gives rise to sufficient security without giving rise to countermeasures having a duration which leads to unreasonably high overheads. The multiple may be no fewer than 1, 2, 4, 8, 16, 32, 64, 128, 256, or 512. Multiplying the bias duration *d_{b}* by an integer ensures that the bias component of the duration, i.e. the component of the delay which is heavily dependent on the device is large, and therefore ensures a significant difference between the occurrences of the POls between two different devices.

Where the bias is a multiple of the hash *H*₀ of the secret *S*, the multiple may be derived from the 2*^{v}*, where *v* is the length of the substrings described below.

We now explain the generation of the adjustment, for a given critical value *kᵢ*. Generating the adjustment may comprise applying a hashing algorithm to a previous internal state *H*_{*i-*1} of the device, to generate an *i*^{th} internal state *Hᵢ* having a length *L*. Herein, the "internal state" refers to some quantity stored in the memory of the device, and may be in the form of e.g. a bitstring. *H*₀ and the *Hᵢ* may have the same length, as outputs of the same hashing algorithm.

For a first critical value *kᵢ*, the previous internal state *H*₀ may be the hash of the secret *S*. For subsequent critical values *kᵢ*, the previous internal state *H*_{*i*-1} is the internal state generated for the previous critical value *k*_{*i*-1}.

Generating the adjustment may further comprising dividing the internal state *Hᵢ* into *L*/*v* substrings, each having a length *v*. The substrings may be represented as [*Vᵢⱼ*], where the subscript *i* corresponds to the critical value *kᵢ* to which the internal state *Hᵢ* corresponds, and the subscript *j* denotes the *j*^{th} critical operation¹. Each substring [*Vᵢⱼ*] may then define an adjustment corresponding to a respective *j*^{th} critical operation of the sensitive algorithm. Thus, for the first critical value, the adjustment to the third critical operation would be defined by [*V*₁₃], for example. When the substrings are bitstrings of length *v*, the number of different values that they may take is given by *N* = 2*^{v}.* In these cases, in order to achieve a balance between security and overheads, *v* may be no less than 2, 3, 4, 5, 6, 7, or 8, and may be no more than 8, 9, 10, 11, or 12. In preferred cases, v may be 3, 4, 5, 6, 7, or 8, so that *N* may be 8, 16, 32, 64, 128, or 256. The values of *v* or *N* should be selected to be large enough to have a noticeable effect that a reasonable adversary cannot detect and bypass.

It may be said that, for a critical value *kᵢ* the duration comprises a bias component derived directly from a hash of the secret *S*, and an adjustment component derived from a substring of an internal state *Hᵢ* which results from the application of a hashing algorithm to the secret *S* a total of (*i* + 1) times. From this, it may be appreciated that the bias component is constant for a given device, but that the adjustment component changes depending on the critical value *kᵢ* which is being used during execution of the sensitive algorithm. The duration may be the sum of the bias duration and the adjustment duration.
¹ It follows that *L*/*v* should therefore be greater than or equal to the number of critical operations.

The above relates to countermeasures which have an associated duration. However, it will be appreciated that the same may apply to other countermeasures, as long as they can be defined or parameterized numerically. The clock ratio effectively defines how many clock cycles instruction takes to finish. Modifying the clock ratio will induce timing modifications in the traces or other leakage signals, as instructions are executed with different timings. Just like dummy interruptions, it is another way of creating delays/advances in the trace. *H*₀ and the *Hᵢ* can be computed as above to generate clock ratio modifications that would create windows of delays just like with standard delays. In implementations where the one or more countermeasures comprise modifications of the clock ratio, the techniques for determining the durations of e.g. delays or other countermeasures may still be used, and the computer-implemented method may comprise an additional step of generating clock ratio modification data which defines one or more modifications of the clock ratio of the device, and the times at which those modifications take place, such that the resulting delays are as determined using the techniques outlined elsewhere in the application.

In some cases, the critical value may change, for example because a user who is associated with a different critical value is using the device to execute the sensitive algorithm. In these cases, the critical value may be a first critical value, the signal modification data may be first signal modification data, the one or more countermeasures may be one or more first countermeasures, and the computer-implemented method may further comprise: generating second signal modification data based on the secret *S*, the second signal modification data defining one or more second countermeasures to be executed during execution of the sensitive algorithm; and executing the sensitive algorithm and second countermeasures according to the second signal modification data.

The second signal modification data may be generated in the same manner as the first signal modification data, as outlined earlier in this patent application, noting that the bias component of the signal modification data does not change, only the adjustment section, because of the additional hashing algorithm which is applied.

We now discuss the execution of the sensitive algorithm and countermeasures according to the signal modification data. As discussed, execution of the sensitive algorithm may comprise execution of each of a plurality of critical operations. In some cases, the signal modification data may define a respective countermeasure to be executed before each of the critical operations. Accordingly, execution of the sensitive algorithm and countermeasures according to the signal modification data may comprise executing a first countermeasure as defined by the signal modification data, and executing a first critical operation, wherein the first countermeasure is executed before the first critical operation is executed. This may be repeated for all critical operations having an associated countermeasure, which in some cases, is all of the critical operations. More specifically, execution of the sensitive algorithm and the one or more countermeasures according to the signal modification data may comprise execution of each of the critical operations of the sensitive algorithm, and before each critical operation having a countermeasure associated therewith, executing the countermeasure associated with the critical operation.

A second aspect of the invention provides a data processing component configured to execute the computer-implemented method of the first aspect of the invention. All of the optional features set out above in respect of the first aspect of the invention apply equally well to the second aspect of the invention. The data processing component may be in the form of a chip. A third aspect of the invention provides a computer program or computer program product (which includes, for example, a software application which may be offered for download by a provider) comprising instructions which, when executed by a computer, cause the computer to execute the computer-implemented method of the first aspect of the invention.

The invention includes the combination of the aspects and preferred features described except where such a combination is clearly impermissible or expressly avoided.

### SUMMARY OF THE FIGURES

Embodiments and experiments illustrating the principles of the invention will now be discussed with reference to the accompanying figures in which:
- Fig. 1 depicts a data processing component which may be used to execute computer-implemented methods according to the present disclosure.
- Fig. 2 is a flowchart illustrating a computer-implemented method according to the present disclosure.
- Fig. 3 is a flowchart illustrating calculation of a bias *N* · *d_{b}.*
- Fig. 4 is a flowchart illustrating calculation of a set of adjustments *Aᵢⱼ*.
- Fig. 5 shows a series of traces in order to demonstrate the effectiveness of the computer-implemented method of the present disclosure.
- Fig. 6 shows some traces obtained in the lab in order to demonstrate the effectiveness of the computer-implemented method of the present disclosure.

### DETAILED DESCRIPTION OF THE INVENTION

Aspects and embodiments of the present invention will now be discussed with reference to the accompanying figures. Further aspects and embodiments will be apparent to those skilled in the art. All documents mentioned in this text are incorporated herein by reference.

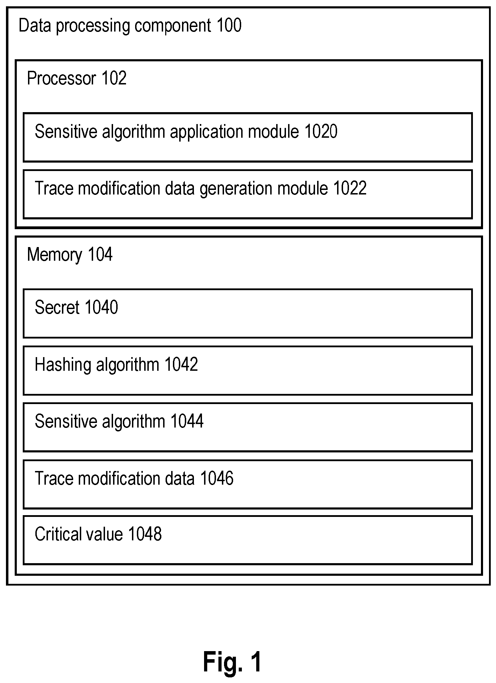

Fig. 1 shows a data processing component 100 which is configured to execute the computer-implemented method of the first aspect of the present invention. The data processing component 100 comprises a processor 102 and a memory 104, which may include both persistent and non-persist memory. The data processing component 100 may be in the form of a chip, and may form part of a computer processor or a processor of any other suitable device. The processor 102 comprises two functional modules, a sensitive algorithm application module 1020 and a signal modification data generation module 1022. The functional modules may be implemented in hardware (i.e. dedicated physical components for executing each function), or in software (e.g. in the form of different portions of code which, when executed, cause the data processing component 100 or the processor 102 of the data processing component 100 to execute the function). The operation of the sensitive algorithm application module 1020 and the signal modification data generation module 1022 is discussed later in this disclosure.

The memory 104 stores a secret 1040, a hashing algorithm 1042, a sensitive algorithm 1044, signal modification data 1046, and a critical value 1048. It should be noted that the memory 104 may not store all of these items from the outset, and some may be generated during the operation of the sensitive algorithm application module 1020 and the signal modification data generation module 1022. This will become clear from the subsequent description of the invention.

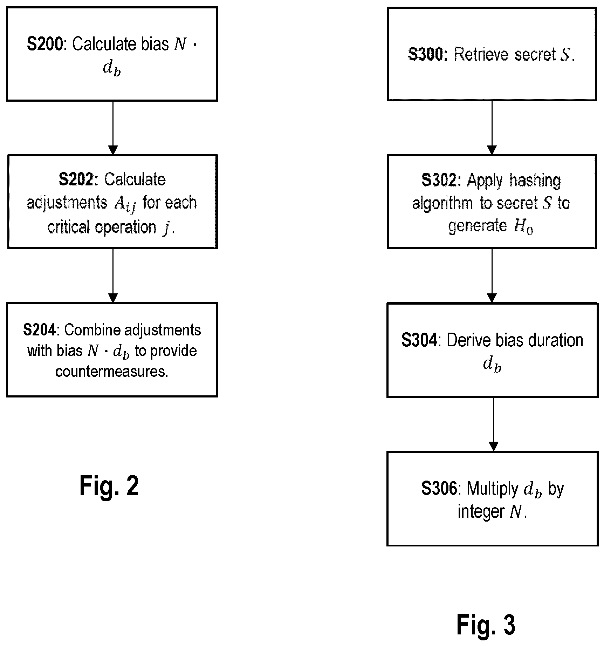

As discussed, at a high-level, the present invention involves generating signal modification data 1046 defining a series of countermeasures to be executed by the data processing component 100 (specifically the sensitive algorithm application module 1020 of the processor 102 of the data processing component 1022). We now describe an implementation of the invention with reference to Figs. 2 to 5.

In the following description, these labels are used:
- *kᵢ* are the critical values 1048 of the sensitive algorithm 1044 after *i* executions. In other words, the critical value 1048 may change after it has been executed a given number of times, for example because the sensitive algorithm 1044 is being applied using a new critical value 1048. This could be the case if the key is a rotating key, or if a different user is executing the sensitive algorithm 1044.
- *Hᵢ* denotes an internal state after *i* executions, and may comprise a bitstring of size *L*. The internal state *Hᵢ* is data from which modifications to the signal (i.e. the trace) are derived, as explained in detail shortly.
- *S* is a secret which is unique to the device. The secret may take any form, as long as it is hashable, independent of the encoding. For example, the secret could be any string of data, such as a word, an integer, or a bitstring.
- *Hash* is a hash function.
- *H*₀ is defined as *Hash*(*S*). It will be appreciated that, due to the nature of hash functions, the value of *H*₀ is highly sensitive to small changes in *S*. For example, if even one digit or bit in *S* changes, the value of *H*₀ may change completely. Any well-known hashing function, such as MD5, SHA-1, SHA-3SHA-256, and SHA-512 may be used for this purpose.

At a high-level, the present invention comprises modifying the time evolution of a signal using data which is derived from a secret which is unique to the device which is generating the signal.

Fig. 2 illustrates one implementation in which, for each of a plurality of critical operations *j*, a respective countermeasure is generated, calculated, or computed. In the particular implementation, the countermeasure for each critical operation *j* includes a bias component *N* · *d_{b}* and an adjustment component *Aᵢⱼ*.

In a first step S200 of Fig. 2, the bias component is calculated, by the signal modification data generation module 1022 of the processor 102 of the data processing component 100.

Fig. 3 illustrates one method using which a bias component may be calculated or otherwise generated or computed. In step S300 of Fig. 3, the signal modification data generation module 1022 retrieves the secret *S* 1040 from the memory 104. Then, in step S302, the signal modification data generation module 1022 retrieves and executes the hashing algorithm 1042 on the secret *S* 1040, thereby generating the internal state *H*₀, which is a hash of the secret *S* 1040. Then, in step S304, a bias duration *d_{b}* is derived from the internal state *H*₀, for example by selecting a substring of the internal state *H*₀. Finally, in optional step S306, the bias duration *d_{b}* may be multiplied by an integer *N* to generate the bias *N* · *d_{b}.* In the absence of the execution of step S304, the bias may just be *d_{b}.*

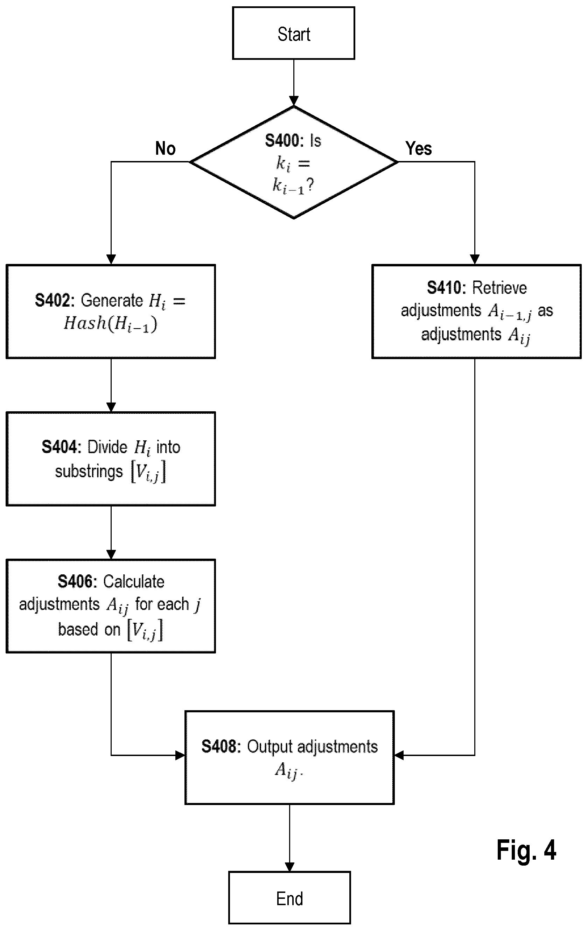

Returning to Fig. 2, after the bias is calculated, in step S202, a series of adjustments *Aᵢⱼ* are calculated by the signal modification data generation module 1022. Specifically, for the *i*^{th} critical value, the adjustment *Aᵢⱼ* defines the adjustment which is made to the bias component to form the countermeasure for the *j*^{th} critical operation of the sensitive algorithm 1044. Fig. 4 illustrates the process by which the signal modification data generation module 1044 calculates or otherwise generates or computes the adjustments *Aᵢⱼ*.

The process by which the adjustments *Aᵢⱼ* are generated depends on whether the critical value *kᵢ* has been used before. Accordingly, in a first step S400 of Fig. 4, it is determined whether *kᵢ* = *k*_{*i-*1}, i.e. whether the current critical value is the same as the previous critical value. If not, or if *kᵢ* = *k*₁, the process proceeds to step S402. Below, we explain the process for two scenarios, where *kᵢ* = *k*₁, and for a generic *kᵢ*.

For the first execution of the sensitive algorithm, for which the critical value is *k*₁, the signal may be modified according to the following scheme (executed by the signal modification data generation module 1022 of the processor 102), as depicted in Fig. 4:
- **S402:** Compute *H*₁ = *Hash*(*H*₀) = *Hash*(*Hash*(*S*)), e.g. by the signal modification data generation module 1022 retrieving the hashing algorithm 1042 from the memory and applying it to *H*₀.
- **S404:** Divide *H*₁ into *L*/*v* substrings, each of length *v*: {[*V*_{1,1}], [*V*_{1,2}], ... , [*V*_{1*,L*/*v*}]}. The number *N* = 2*^{v}* of values that each [*V_{i,j}*] can take, is preferably large. There is a trade-off between security and overhead: the larger the value of *N* the better the security (because of the range of values of delay), but this comes with a big overhead. *v* may be in the range from 1 to 10, in the range from 2 to 8, in the range from 3 to 6, or may be 4 or 5.

- **S406:** For each element [*V_{i,j}*], derive a modification of the signal, i.e. calculate, compute or otherwise generate an adjustment *Aᵢⱼ*. Examples of adjustments *Aᵢⱼ* which may be used include the following:
   - Delays based on the [*V_{i,j}*]. This may be done by interpreting each value [*V_{i,j}*] as a number of cycles of a clock, or as a duration of the delay.
   - Modifications of the clock ratio of the system according to the values [*V_{i,j}*].
   - Dummy interruptions where the occurrence is fixed by [*V_{i,j}*].
   - Apply some specific countermeasure *n* times with parameters [*V_{i,j}*]. Examples of suitable countermeasures include the clock stealer countermeasure, masking, or shuffling. Any suitable countermeasure may be used.
- **S408:** Output the adjustments *Aᵢⱼ*.

As discussed, the critical value of the sensitive algorithm may change or update over time, i.e. at a given time, *kᵢ* → *k*_{*i*+1}.

When *kᵢ* ≠ *k*_{*i*-1}, the process is largely identical as for *H*₁:
- **S402:** Compute *Hᵢ* = *Hash*(*H*_{*i*-1}), e.g. by the signal modification data generation module 1022 retrieving the hashing algorithm 1042 from the memory and applying it to *Hᵢ.*
- **S404:** Divide *Hᵢ* into *L*/*v* substrings, each of length *v*: {[*V*_{*i,*1}], [*V*_{*i*,2}], ..., [*V*_{*i,L*/*v*}]}. The number *N* = 2*^{v}* of values that each [*V_{i,j}*] can take, is preferably very large.
- **S406:** For each element [*V_{i,j}*], calculate, compute or otherwise generate adjustments *Aᵢⱼ* of the signal, which may be done as for *H*₁.
- **S408:** Output the adjustments *A_{i,j}*.

If it is determined in step S400 that *kᵢ* = *k*_{*i*-1}, then the process proceeds instead to step S410, in which the previous adjustments *A*_{*i*-1,*j*} are retrieved and form the adjustments *Aᵢⱼ*, and then output in step S408.

Returning to Fig. 2, now that the bias *N* · *d_{b}* and adjustments *Aᵢⱼ* have been calculated, respectively, in steps S200 and S202 (noting that these steps do not need to be performed in sequence, and could be performed in the opposite order, or in parallel), the process proceeds to step S204, in which the adjustments *Aᵢⱼ* are combined with the bias *N · d_{b}* to provide the countermeasures defined by the signal modification data 1046.

It is advantageous that the modification to the time evolution of the trace, achieved by modification of the execution of the sensitive algorithm, depends primarily on *H*₀, which itself depends strongly on the secret *S*. This has the effect of heavily biasing the modifications according to *S*. This means that modifications of the signal derived from sensitive values {*k*₀, *k*₁, ... , *k_{M}*} with secret *S* follow a distribution which is fundamentally different from the same {*k*₀, *k*₁, *... , k_{M}*} but with a different secret *S'*.

To achieve this, there are two levels of modification: the bias, which depends on *H*₀, and the adjustment *Aᵢⱼ*, which is based on *Hᵢ*. The bias provides a large-scale modification based on *H*₀, which is then adjusted or otherwise fine-tuned based on *Hᵢ.* It should be noted that in some cases, a technical effect may be achieved by only applying the modification based on *H*₀, i.e. the modification based on the *Hᵢ* may be considered optional.

For a given critical value *i*, the countermeasure to be executed before each critical operation *j* of the sensitive algorithm may be calculated, computed, or otherwise generated as: $N ⋅ {d}_{b} + {A}_{ij}$

We now explain this with reference to an example in which a series of delays *dᵢⱼ* are introduced into the signal (not be confused with *d_{b}*, which is component of the delay referred to herein as the "bias delay"). As before, the subscript *i* represents the *i*^{th} execution of the sensitive algorithm. In order to execute a sensitive algorithm, the critical value *kᵢ* is typically used many times, and subscript *j* represents the *j*^{th} critical operation. Thus, *dᵢⱼ* represents the delay added to critical operation *j* of execution *i* of the sensitive algorithm. The *dᵢⱼ* may be generated based on the [*V_{i,j}*] defined above, where the hashing function *Hash* is selected to ensure that its output is large enough that *L*/*v* is equal to or greater than *j*. The total delay *dᵢⱼ* may then be calculated as follows: ${d}_{ij} = N . {d}_{b} + \left[{V}_{i , j}\right]$

Here, *N* is derived from the number of possible values which [*V_{i,j}*] can take, and is preferably the number of values which [*V_{i,j}*] can take. So, if [*V_{i,j}*] includes 4 bits, and can hence take values from 0 to 15, then *N* will be 16. In this way, *N* effectively defines a window in which the delay occurs, and [*V_{i,j}*] fine tunes the location of the delay within the window.

The set of delays may be calculated in advance, because for a given execution of the sensitive algorithm, it is known how many critical operations are performed, and when they will take place in time. For a given device and critical value, the set of delays will always be the same. They are updated only when the critical value is changed, which is typically only done very rarely, and the delays are defined for all operations that use that key.

At this point, a set of delays *dᵢⱼ* are calculated and stored in the memory 104 as the signal modification data 1046.

After the delays *dᵢⱼ* have been calculated, they are used to modify the application of the sensitive algorithm. By collecting the electromagnetic traces which leak when the sensitive algorithm is executed in an unprotected manner, it is possible to determine when each of the POls occurs, i.e. when each of the critical operations takes place during execution of the critical algorithm.

Then during execution of the sensitive algorithm, each delay *dᵢⱼ* is added before the respective critical operation *j* is executed. More specifically, each delay *dᵢⱼ* may be executed after the (*j* - 1)^{th} critical operation is executed, and *j*^{th} critical operation is executed. In some cases, the delay *dᵢⱼ* may be executed immediately before or just before the *j*^{th} critical operation is executed. As discussed above, the timing of the critical operations within the overall execution of the sensitive algorithm may be determined in advance, in order to inform the timings at which the delays *dᵢⱼ* are implemented.

The effect of adding each of the delays *dᵢⱼ* before a respective *j*^{th} critical operation is to shift the POI associated with each critical operation in time. As a result, the POls in the training phase will not coincide in time with POls in the inference phase, if the two phases take place using different devices. This means that in the training phase, an attacker will think they need to focus on a certain region to build their model (the POI of the training phase) because the targeted critical value leaks at that moment. But, due to the delays being different in the inference phase, the targeted critical value will leak at another moment in time and the region in time which leaked the critical value during training does not do so during inference. The attacker is therefore unable effectively to train an algorithm on a training device to infer the critical value *kᵢ* from traces leaking from a different, inference device.

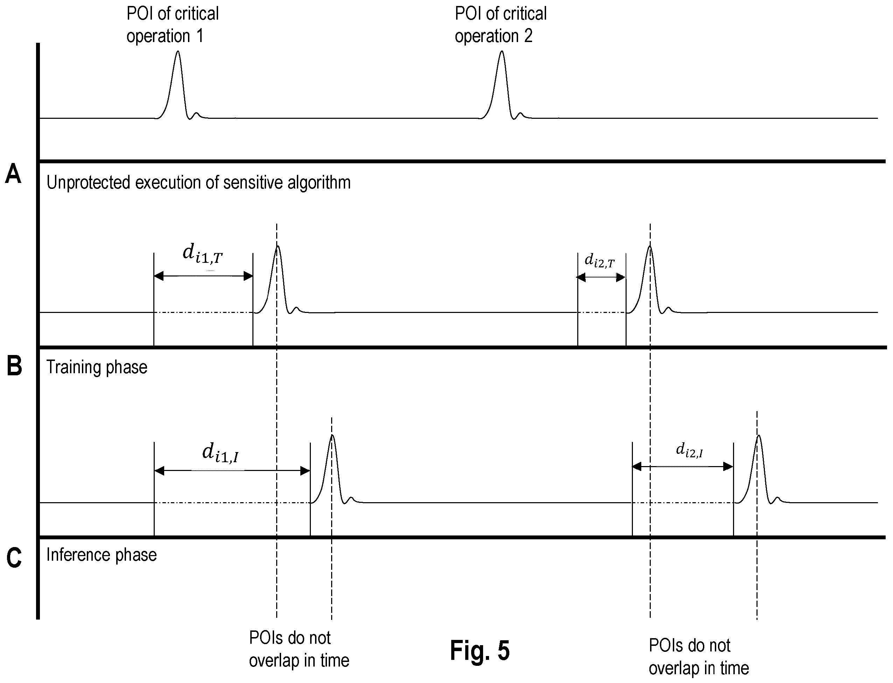

The effect of the invention is illustrated in Fig. 5, which shows, schematically three traces A, B, and C. Trace A is trace associated with an unprotected algorithm, and shows two POIs, each associated with a respective *j*^{th} critical operation. Trace B is a trace which includes two delays *d*_{*i*1*,T*} added before the execution of critical operation 1, and *d*_{*i*2*,T*} added before execution of critical operation 2. Trace B represents the trace leaking from a first device during the training phase, hence the "T" in the subscripts of the delays. Trace C is a trace which includes two delays *d*_{*i*1*,I*} added before the execution of critical operation 1, and *d*_{*i*2,*I*} added before execution of critical operation 2. Trace C represents the trace leaking from a second device during the inference phase, hence the "I" in the subscripts of the delays. It can be seen that the delays applied in the training phase are very different from the corresponding delays in the inference phase, which is a result of the strong dependence of the delays *dᵢⱼ* on the secret *S* of each respective device. As a result of the introduced delays, the POIs for critical operation 1 do not overlap at all, and the POIs for critical operation 2 do not overlap at all. This means that an attacker who has trained a deep learning model on the training device will not be able to retrieve the critical value during the inference phase.

We now describe a specific example implemented by the inventors as a proof-of-concept.

In the specific example, the algorithm was a cryptographic algorithm which, without the introduction of delays, ran in 160 µs. The algorithm included 293 critical operations. By collecting traces of the unprotected algorithm and applying signal processing techniques, it was possible to determine when the POIs associated with each of the 293 critical operations occurred.

In the example, the hashing function returns a bitstring of length 4 · 293 = 1172 bits, such that each [*Vᵢⱼ*] is 4 bits long, and can therefore take a value between 0 and 15, which represents the number of additional cycles introduced as a delay. The delays are then added before each of the *j* critical operations are performed, thereby shifting the POI of the *j*^{th} critical operation.

The total delay *dᵢⱼ* for operation *j* at execution *i* is defined as *N* · *d_{b} + V_{i,j}* with *N* the number of values *V_{i,j}* can take to leave space for *V_{i,j}. N* is basically the width of the "window". 4 bits of entropy were chosen for *V_{i,j}*, so *N* = 16.

For *H*₀, 4 bits of entropy were also chosen for simplicity, but this number could be different. This means *d_{i,j}* can have 256 possible values (4 bits + 4 bits of entropy). The critical operation can therefore be performed, effectively, in 16 possible windows, defined by the entropy of *H*₀, that is constant per device (and also the same for a different operation *j'*). Inside this window, it can take 16 possible values, defined by the entropy of *Hᵢ* which here is the same as the one from *H*₀, but could also be different.

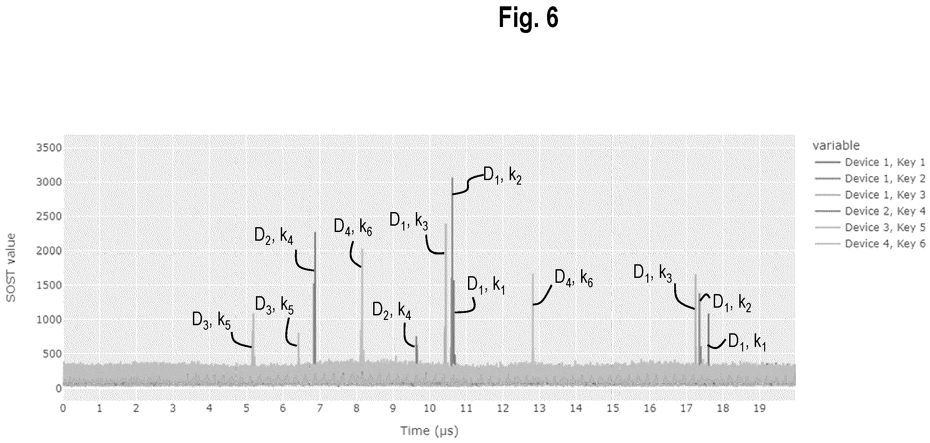

Fig. 6, shows results from this specific implementation.

There are 6 curves each having 2 peaks, each peak respectively representing the POIs of two consecutive critical operations. There are four different devices and three different keys for the first one. Since there are two critical operations, a total of two delays were introduced, one per critical operation.

The first delay is introduced just before the first critical operation and is the reason why the POI do not start earlier in the trace. The second delay is introduced just before the second critical operation and is the reason why the two peaks are not closer in time.

It can be seen that a change of keys introduces a slight - but noticeable - change in the POls because the respective curves do not perfectly align. It can also be seen that the relative timing positions of the POIs are different for different critical operations. For example, Key 1 on Device 1 seems to add a larger delay on the second critical operation because it is not as close to the red curve on the second peak.

The change of device has a much larger effect as can be observed. In particular, the rank of devices' *H*₀ is naturally determined by the order their respective first peak arrives in time. Here, devices 3, 2, 4, 1 are ranked in increasing *H*₀ order. But the order is also reflected in the time elapsed between two operations, translated to the distance between the two peaks. We observe that the smaller the *H*₀, the smaller the distance between operations, which shows the fact that *H*₀ remains the same across multiple operations.

It will be noted that the modifications which are generated are deterministic, depending on the secret S and the critical values *kᵢ*. Assuming the attacker trains its model using a single fixed critical value, the deterministic nature of the modifications leads to a model that is trained on modifications that are fixed and different than the ones during the inference phase. Non-deterministic modifications would have helped the attacker since they could predict the modifications due to more varied data.

If an attacker uses different keys to train the model, there is an increased risk that they could learn how to predict the modifications. However, this risk is eliminated by ensuring that the modifications are heavily biased according to the secret *S*, which is unique to the individual device. So, adding such a bias through the combination of modifications based on *H*₀ leads to different POI distributions even if the attacker uses multiple keys during training.

If the value of *N* is high enough, the countermeasure provided by the present invention forces the attacker to train their model considering the entire trace. This is a very complex operation, requiring large amounts of computing power. The countermeasure therefore enables robust protection against side-channel attacks based on deep learning models.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

The scope of protection is defined by the claims.

## Claims

1. A computer-implemented method of modifying the execution of a sensitive algorithm (1044) by a device having a secret S (1040) associated with it, where execution of the sensitive algorithm (1044) comprises using a critical value *kᵢ* (1048), the computer-implemented method comprising:
generating signal modification data (1046) based on the secret S (1040), the signal modification data (1046) defining one or more countermeasures to be executed during execution of the sensitive algorithm (1044); and
executing the sensitive algorithm (1044) and one or more countermeasures according to the signal modification data (1046);
wherein the signal modification data (1046) defines a duration of each countermeasure;
**characterized in that**
wherein the duration of each countermeasure comprises a bias component and an adjustment component; and
generating the signal modification data (1046) comprises:
generating the bias component;
generating the adjustment component (Aᵢⱼ) of each countermeasure; and
combining the bias component and the adjustment component to give the total duration of each countermeasure; and
wherein for an *i*^{th} critical value *kᵢ* (1048):
the duration comprises:
a bias component derived from a hash *H*₀ of the secret *S* (1040); and
an adjustment component (Aᵢⱼ) derived from a substring of an internal state *Hᵢ* which results from (*i* + 1) applications of a hashing algorithm (1042) to the secret (1040).

2. The computer-implemented method of claim 1, wherein:
the sensitive algorithm (1044) is a cryptographic algorithm; and
the critical value *kᵢ* (1048) is a cryptographic key.

3. The computer-implemented method of claim 1 or claim 2, wherein:
generating the signal modification data (1046) comprises applying a hashing algorithm (1042) to the secret S (1040) associated with the device.

4. The computer-implemented method of any one of claims 1 to 3, wherein:
the signal modification data (1046) defines, for each countermeasure, the nature of the countermeasure, and a timing position at which the countermeasure is to be executed during execution of the sensitive algorithm (1044).

5. The computer-implemented method of any one of claims 1 to 4, wherein:
execution of the sensitive algorithm (1044) comprises execution of a plurality of critical operations; and
the signal modification data (1046) defines or specifies a respective countermeasure corresponding to each critical operation executed during execution of the sensitive algorithm (1044).

6. The computer-implemented method of any one of claims 1 to 5, wherein:
each countermeasure comprises a delay defined in terms of an absolute length of time, or a number of cycles of a clock of the device or a clock associated with the device;
each countermeasure comprises a modification of a clock ratio of the device; or
each countermeasure comprises a dummy interruption of the execution of the sensitive algorithm.

7. The computer-implemented method according to any one of the preceding claims, wherein:
the bias component is derived from a substring or a subset of bits of the hash *H*₀.

8. The computer-implemented method according to any one of the preceding claims, wherein generating the adjustment component of the duration of each countermeasure comprises:
applying a hashing algorithm (1042) to a previous internal state *H*_{*i*-1} of the device to generate an *i*^{th} internal state *Hᵢ*; and
dividing the internal state *Hᵢ* into a plurality of substrings [*Vᵢⱼ*], each having a length *v*, each substring defining an adjustment corresponding to a respective *j*^{th} critical operation of the sensitive algorithm (1044).

9. The computer-implemented method of any one of claims 1 to 8, wherein:
execution of the sensitive algorithm (1044) and the one or more countermeasures according to the signal modification data (1046) comprises execution of each of the critical operations of the sensitive algorithm (1044), and before each critical operation having a countermeasure associated therewith, executing the countermeasure associated with the critical operation.

10. A data processing component (100) **characterized in that** the data processing component (100) is configured to execute the computer-implemented method of any one of claims 1 to 9.

## Patentansprüche

1. Computerimplementiertes Verfahren zum Modifizieren der Ausführung eines sensiblen Algorithmus (1044) durch eine Vorrichtung, die ein ihr zugeordnetes Geheimnis S (1040) aufweist, wobei die Ausführung des sensiblen Algorithmus (1044) das Verwenden eines kritischen Werts kᵢ (1048) umfasst, wobei das computerimplementierte Verfahren Folgendes umfasst:
Erzeugen von Signalmodifizierungsdaten (1046), basierend auf dem Geheimnis S (1040), wobei die Signalmodifizierungsdaten (1046) eine oder mehrere Gegenmaßnahmen definieren, die während der Ausführung des sensiblen Algorithmus (1044) auszuführen sind; und
Ausführung des sensiblen Algorithmus (1044) und einer oder mehrerer Gegenmaßnahmen gemäß den Signalmodifizierungsdaten (1046);
wobei die Signalmodifizierungsdaten (1046) eine Dauer jeder Gegenmaßnahme definieren;
**dadurch gekennzeichnet, dass**
wobei die Dauer jeder Gegenmaßnahme eine Grundkomponente und eine Anpassungskomponente umfasst; und
das Erzeugen der Signalmodifizierungsdaten (1046) umfasst:
Erzeugen der Grundkomponente;
Erzeugen der Anpassungskomponente (Aᵢⱼ) jeder Gegenmaßnahme; und
Kombinieren der Grundkomponente und der Anpassungskomponente, um die Gesamtdauer jeder Gegenmaßnahme zu ergeben; und
wobei für einen i-ten kritischen Wert *kᵢ* (1048):
die Dauer umfasst:
eine Grundkomponente, die von einem Hash *H₀* des Geheimnisses *S* (1040) abgeleitet ist; und
eine Anpassungskomponente (Aᵢⱼ), die aus einer Teilzeichenfolge eines internen Zustands *Hᵢ* abgeleitet wird, der sich aus (*i* +1) Anwendungen eines Hash-Algorithmus (1042) auf das Geheimnis (1040) ergibt.

2. Computerimplementiertes Verfahren nach Anspruch 1, wobei:
der sensible Algorithmus (1044) ein kryptographischer Algorithmus ist; und
der kritische Wert *kᵢ* (1048) ein kryptographischer Schlüssel ist.

3. Computerimplementiertes Verfahren nach Anspruch 1 oder Anspruch 2, wobei:
das Erzeugen der Signalmodifizierungsdaten (1046) das Anwenden eines Hash-Algorithmus (1042) auf das der Vorrichtung zugeordnete Geheimnis *S* (1040) umfasst.

4. Computerimplementiertes Verfahren nach einem der Ansprüche 1 bis 3, wobei
die Signalmodifizierungsdaten (1046) für jede Gegenmaßnahme die Art der Gegenmaßnahme sowie einen Zeitpunkt definieren, zu dem die Gegenmaßnahme während der Ausführung des sensiblen Algorithmus (1044) durchgeführt werden soll.

5. Computerimplementiertes Verfahren nach einem der Ansprüche 1 bis 4, wobei
die Ausführung des sensiblen Algorithmus (1044) die Ausführung einer Vielzahl kritischer Operationen umfasst; und
die Signalmodifizierungsdaten (1046) eine jeweilige Gegenmaßnahme, die jeweils einer kritischen Operation entspricht, die während der Ausführung des sensiblen Algorithmus (1044) ausgeführt werden, definieren oder spezifizieren.

6. Computerimplementiertes Verfahren nach einem der Ansprüche 1 bis 5, wobei
jede Gegenmaßnahme eine Verzögerung umfasst, die als absolute Zeitdauer oder als Anzahl von Takten einer Uhr der Vorrichtung oder einer der Vorrichtung zugeordneten Uhr definiert ist;
jede Gegenmaßnahme eine Modifizierung des Taktverhältnisses der Vorrichtung umfasst; oder
jede Gegenmaßnahme eine vorgetäuschten Unterbrechung der Ausführung des sensiblen Algorithmus umfasst.

7. Computerimplementiertes Verfahren nach einem der vorstehenden Ansprüche, wobei
die Grundkomponente aus einer Teilzeichenfolge oder einer Teilmenge von Bits des Hashwerts *H₀* abgeleitet ist.

8. Computerimplementierte Verfahren nach einem der vorstehenden Ansprüche, wobei das Erzeugen der Anpassungskomponente der Dauer jeder Gegenmaßnahme Folgendes umfasst:
Anwenden eines Hash-Algorithmus (1042) auf einen vorherigen internen Zustand *Hᵢ₋₁* der Vorrichtung, um den i-ten internen Zustand *Hᵢ* zu erzeugen, und
Unterteilen des internen Zustands *Hᵢ* in eine Vielzahl von Teilzeichenfolgen [Vᵢⱼ], die jeweils eine Länge *v* aufweisen, wobei jede Teilzeichenfolge eine Anpassung definiert, die einer jeweiligen j-ten kritischen Operation des sensitiven Algorithmus (1044) entspricht.

9. Computerimplementiertes Verfahren nach einem der Ansprüche 1 bis 8, wobei
die Ausführung des sensiblen Algorithmus (1044) und der einen oder mehreren Gegenmaßnahmen gemäß den Signalmodifizierungsdaten (1046) die Ausführung der jeweiligen kritischen Operationen des sensiblen Algorithmus (1044), und bevor jeder kritischen Operation eine Gegenmaßnahme zugeordnet wird, das Ausführen der der kritischen Operation zugeordneten Gegenmaßnahme umfasst.

10. Datenverarbeitungskomponente (100), **dadurch gekennzeichnet, dass** die Datenverarbeitungskomponente (100) zum Ausführen des computerimplementierten Verfahrens nach einem der Ansprüche 1 bis 9 ausgelegt ist.

## Revendications

1. Procédé mis en œuvre par ordinateur pour modifier l'exécution d'un algorithme sensible (1044) par un dispositif ayant un secret S (1040) lui étant associé, où l'exécution de l'algorithme sensible (1044) comprend d'utiliser une valeur critique *kᵢ* (1048), le procédé mis en œuvre par ordinateur comprenant les étapes consistant à :
générer des données de modification de signal (1046) sur la base du secret *S* (1040), les données de modification de signal (1046) définissant une ou plusieurs contre-mesures devant être exécutées pendant l'exécution de l'algorithme sensible (1044) ; et
exécuter l'algorithme sensible (1044) et une ou plusieurs contre-mesures en fonction des données de modification de signal (1046) ;
dans lequel les données de modification de signal (1046) définissent une durée de chaque contre-mesure ;
**caractérisé en ce que**
la durée de chaque contre-mesure comprend une composante de biais et une composante d'ajustement ; et
l'étape consistant à générer les données de modification de signal (1046) comprend de :
générer la composante de biais ;
générer la composante d'ajustement (Aᵢⱼ) de chaque contre-mesure ; et
combiner la composante de biais et la composante d'ajustement pour donner la durée totale de chaque contre-mesure ; et
dans lequel pour une *i-ième* valeur critique *kᵢ* (1048) :
la durée comprend :
une composante de biais dérivée d'un hachage *H₀* du secret *S* (1040) ; et
une composante d'ajustement (Aᵢⱼ) dérivée d'une sous-chaîne d'un état interne *Hᵢ* qui résulte de (*i* + 1) applications d'un algorithme de hachage (1042) au secret (1040).

2. Procédé mis en œuvre par ordinateur selon la revendication 1, dans lequel :
l'algorithme sensible (1044) est un algorithme cryptographique ; et
la valeur critique *kᵢ* (1048) est une clé cryptographique.

3. Procédé mis en œuvre par ordinateur selon la revendication 1 ou 2, dans lequel :
l'étape consistant à générer les données de modification de signal (1046) comprend d'appliquer un algorithme de hachage (1042) au secret *S* (1040) associé au dispositif.

4. Procédé mis en œuvre par ordinateur selon l'une quelconque des revendications 1 à 3, dans lequel :
les données de modification de signal (1046) définissent, pour chaque contre-mesure, la nature de la contre-mesure, et une position de temporisation à laquelle la contre-mesure doit être exécutée pendant l'exécution de l'algorithme sensible (1044).

5. Procédé mis en œuvre par ordinateur selon l'une quelconque des revendications 1 à 4, dans lequel :
l'exécution de l'algorithme sensible (1044) comprend l'exécution d'une pluralité d'opérations traitées ; et
les données de modification de signal (1046) définissent ou spécifient une contre-mesure respective correspondant à chaque opération critique exécutée pendant l'exécution de l'algorithme sensible (1044).

6. Procédé mis en œuvre par ordinateur selon l'une quelconque des revendications 1 à 5, dans lequel :
chaque contre-mesure comprend un délai défini en termes d'une longueur absolue de temps, ou d'un nombre de cycles d'une horloge du dispositif ou d'une horloge associée au dispositif ;
chaque contre-mesure comprend une modification d'un rapport d'horloge du dispositif ; ou
chaque contre-mesure comprend une interruption factice de l'exécution de l'algorithme sensible.

7. Procédé mis en œuvre par ordinateur selon l'une quelconque des revendications précédentes, dans lequel :
la composante de biais est dérivée d'une sous-chaîne ou d'un sous-ensemble de bits du hachage *H₀*.

8. Procédé mis en œuvre par ordinateur selon l'une quelconque des revendications précédentes, dans lequel l'étape consistant à générer la composante d'ajustement de la durée de chaque contre-mesure comprend de :
appliquer un algorithme de hachage (1042) à un état interne précédent *Hᵢ₋₁* du dispositif pour générer un *i*-*ième* état interne *Hᵢ* ; et
diviser l'état interne *Hᵢ* en une pluralité de sous-chaînes [*Vij*], chacune ayant une longueur *v*, chaque sous-chaîne définissant un ajustement correspondant à une *j*-ième opération critique respective de l'algorithme sensible (1044).

9. Procédé mis en œuvre par ordinateur selon l'une quelconque des revendications 1 à 8, dans lequel :
l'exécution de l'algorithme sensible (1044) et desdites une ou plusieurs contre - mesures en fonction des données de modification de signal (1046) comprend l'exécution de chacune des opérations critiques de l'algorithme sensible (1044), et avant que chaque opération critique n'ait une contre-mesure associée à celle-ci, l'exécution de la contre-mesure associée à l'opération critique.

10. Composant de traitement de données (100) **caractérisé en ce que** le composant de traitement de données (100) est configuré pour exécuter le procédé mis en œuvre par ordinateur selon l'une quelconque des revendications 1 à 9.
